# EUROPÄISCHE PATENTSCHRIFT

(11) **EP 0 674 785 B1**
(45) Veröffentlichungstag und Bekanntmachung des Hinweises auf die Patenterteilung: **12.11.1997**
(21) Anmeldenummer: 94901770.1
(22) Anmeldetag: 17.12.1993
(51) Int. Cl.: G06F 13/24

(54) **ANORDNUNG MIT STECKBAREN FUNKTIONSEINHEITEN**
ARRANGEMENT WITH PLUG-IN FUNCTIONAL UNITS
DISPOSITIF A UNITES FONCTIONNELLES ENFICHABLES

(30) Priorität: 21.12.1992 DE 4243347
(43) Veröffentlichungstag der Anmeldung: 04.10.1995
(73) Patentinhaber: SIEMENS AKTIENGESELLSCHAFT, 80333 München (DE)
(72) Erfinder: ABERT, Michael, D-76474 Au (DE); BLOCK, Siegfried, D-76870 Kandel (DE); BOZENHARDT, Johannes, D-76275 Ettlingen (DE); LEIGSNERING, Franz, D-76275 Ettlingen (DE); PFATTEICHER, Werner, D-76327 Pfinztal (DE); SCHEWE, Franz-Clemens, D-76227 Karlsruhe (DE)
(86) Internationale Anmeldenummer: DE9301212
(87) Internationale Veröffentlichungsnummer: WO9415297

(56) Entgegenhaltungen:
- EP-A- 0 324 144
- US-A- 4 849 931
- EDN ELECTRICAL DESIGN NEWS Bd. 26, Nr. 3 , Februar 1981 , NEWTON, MASSACHUSETTS US Seite 88 MACKINTOSH 'INTERROGATION TELLS uP WHICH BOARDS ARE PRESENT'

## Beschreibung

Die Erfindung betrifft eine Anordnung gemäß dem Oberbegriff des Anspruchs 1.

In der deutschen Patentanmeldung P 42 39 030.3 ist eine Anordnung vorgeschlagen, in welcher eine zur Ausführung von Lese- und/oder Schreibzugriffen geeignete CPU-Einheit in jeden Steckplatz steckbar ist. Dazu ist die Anordnung versehen mit mehreren Steckplätzen, die über einen Daten- und Steuerleitungen aufweisenden Systembus miteinander verbunden sind, und mit an Verbindungsmittel der Steckplätze geführten Adreßleitungen, von denen jeweils eine an einen Auswahlanschluß eines Steckplatzes angeschlossen ist. Die CPU-Einheit weist Mittel zum Verbinden mit den Adreßleitungen auf, und jede der restlichen Funktionseinheiten ist mit Mitteln zum Verbinden mit dem Auswahlanschluß des Steckplatzes versehen.
In dieser Anordnung kann die CPU-Einheit nicht unmittelbar erkennen, welche Funktionseinheit z. B. einen Alarm aufgrund einer Störung eines zu steuernden technischen Prozesses ausgelöst hat.

Aus der EP-A-0 324 144 ist ein Datenverarbeitungssystem mit mehreren über Adressen-, Daten- und Steuerleitungen verbundenen Einheiten bekannt, von denen eine eine Prozessoreinheit ist, welcher von den sonstigen Einheiten Ereignisse in Form von Unterbrechungssignalen zuführbar sind. Die Prozessoreinheit ermittelt die ein Unterbrechungssignal abgebende Einheit dadurch, daß die Prozessoreinheit auf das Unterbrechungssignal eine Unterbrechungssignal-Identifizierungsadresse auf die Adressenleitungen schaltet, auf deren Empfang die das Unterbrechungssignal abgebende Einheit ihre Adresse im (1 aus n)-Code auf die Datenleitungen schaltet.

Der vorliegenden Erfindung liegt die Aufgabe zugrunde, eine Anordnung der eingangs genannten Art zu schaffen, in welcher die CPU-Einheit eine gesteckte, alarmauslösende Einheit schnell erkennt.

Diese Aufgabe wird durch die im kennzeichnenden Teil des Anspruchs 1 angegebenen Maßnahmen gelöst.

In einer Ausgestaltung der Erfindung sind die peripheren Einheiten jeweils mit einem Alarmvektorregister versehen, in welchem verschiedene Alarmereignisse hinterlegt werden. Dadurch erkennt die CPU-Einheit, welches Ereignis einen Alarm auf der peripheren Einheit ausgelöst hat.

Die erfindungsgemäße Anordnung wird insbesondere in einer speicherprogrammierbaren Steuerung eingesetzt, vorzugsweise in einer speicherprogrammierbaren Steuerung mit einem Zentralgerät und mindestens einem Erweiterungsgerät, die über ein Verbindungskabel miteinander verbunden sind, welches den System- und Adreßbus, die Adreßleitungen und weitere Adreßleitungen zur Adressierung des Erweiterungsgerätes aufweist.

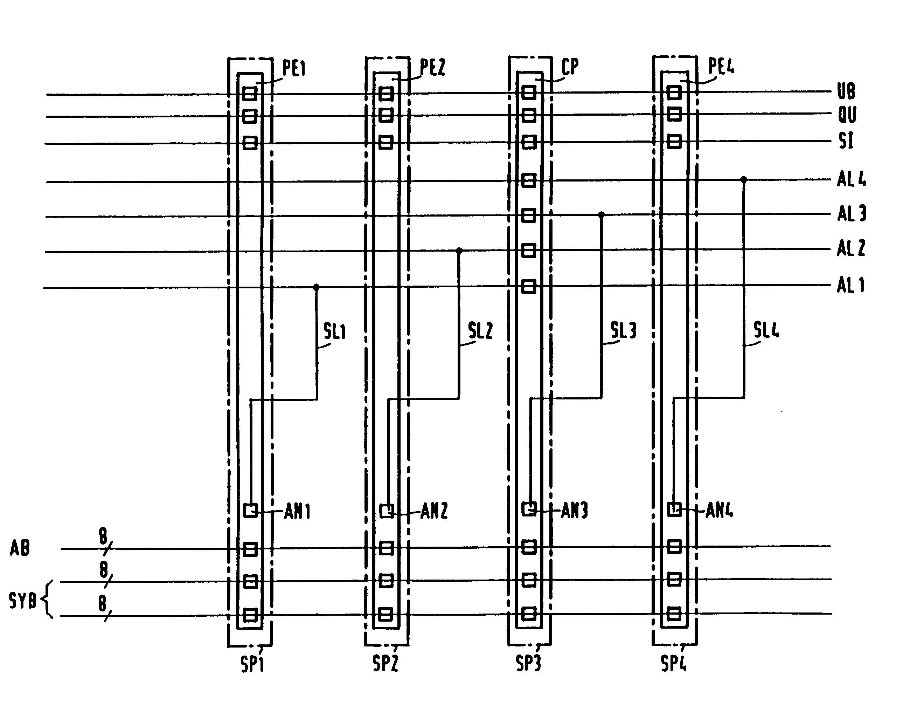

Anhand der Zeichnung, in der ein Ausführungsbeispiel der Erfindung veranschaulicht ist, wird die Erfindung näher erläutert.

Die Figur zeigt ein Prinzipschaltbild einer Anordnung mit Steckplätzen.

Mit SP1 ... SP4 sind Steckplätze bezeichnet, die über einen mehrere Daten- und Steuerleitungen aufweisenden Systembus SYB miteinander verbunden sind. In diesen Steckplätzen SP1 ... SP4 stecken periphere Einheiten PE1, PE2, PE4 und eine zur Ausführung von Lese- und/oder Schreibzugriffen geeignete CPU-Einheit CP, wozu die Steckplätze SP1 ... SP4 und die Einheiten entsprechende Verbindungsmittel, z. B. in Form von Feder- und Messerkontakten, aufweisen. Die Funktionseinheiten PE1, PE2, PE4 und die CPU-Einheit CP sind beliebig in die Steckplätze SP1 ... SP4 steckbar. Dazu sind die Einheiten PE1, PE2, PE4, CP mit Verbindungsmitteln zum Kontaktieren mit einer Unterbrechungs-, einer Quittungsanzeige- und einer Steckplatz-Verbindungsleitung UB, QU, SI und mit Auswahlanschlüssen AN1, AN2, AN4 der Steckplätze SP1, SP2, SP4 und die CPU-Einheit CP mit zusätzlichen Verbindungsmitteln zum Kontaktieren mit Adreßleitungen AL1, AL2, AL3, AL4 versehen, die von Steckplatz zu Steckplatz geführt sind. In der Zeichnung sind die Verbindungen bzw. Anschlüsse in Form schwarzer Quadrate dargestellt. Die erste Adreßleitung AL1 ist über eine Leitung SL1 an den Auswahlanschluß AN1 des Steckplatzes SP1 angeschlossen. Entsprechend sind die Adreßleitungen AL2, AL3, AL4 über Leitungen SL2, SL3, SL4 mit den Auswahlanschlüssen AN2, AN3, AN4 der Steckplätze SP2, SP3, SP4 verbunden. Diese Adreßleitungen AL1 ... AL4 sind in einem Grundzustand mit einem inaktiven Signal, z. B. in Form einer log. "1", beaufschlagt. Zur Adressierung der peripheren Einheiten PE1, PE2, PE4 erzeugt die CPU-Einheit CP ein Adreßsignal in Form einer log. "0", das über die Adreßleitungen AL1, AL2, AL4 und über die Leitungen SL1, SL2, SL4 den Auswahlanschlüssen AN1, AN2, AN4 zugeführt wird. Die CPU-Einheit CP wird über die Adreßleitung AL3, die Leitung SL3 und den Auswahlanschluß AN3 von weiteren zur Ausführung von Lese- und/oder Schreibzugriffen geeigneten, hier nicht dargestellten Einheiten adressiert. Über die Unterbrechungsanzeigeleitung UB führen die peripheren Einheiten PE1, PE2, PE4 der CPU-Einheit CP Unterbrechungssignale zu. Diese Unterbrechungssignale können z. B. Alarmsignale aufgrund einer Störung eines zu steuernden technischen Prozesses oder Prozeß-Zustandsänderungssignale oder Kommunikationsalarmsignale sein. Uber die Quittungsanzeigeleitung QU zeigen die peripheren Funktionseinheiten PE1, PE2, PE4 der CPU-Einheit CP an, daß der Lese- oder Schreibzugriff auf diese peripheren Einheiten abgeschlossen ist.

Im folgenden wird die Funktions- und Wirkungsweise der Anordnung näher erläutert. Es ist angenommen, daß an die periphere Einheit PE1 angeschlossene Sensoren Signalwerte liefern, die auf eine Störung eines zu steuernden technischen Prozesses hinweisen. Ferner ist angenommen, daß in einem Grundzustand die Leitungen mit Signalen in Form einer log. "1" beaufschlagt sind. Die Einheit PE1 erzeugt aufgrund der Störung ein Unterbrechungssignal in Form einer log. "0", das vor der eigentlichen Alarmbearbeitung durch die CPU-Einheit CP identifiziert werden muß, d. h., die CPU-Einheit CP muß zunächst ermitteln, welche Einheit den Alarm ausgelöst hat. Das Unterbrechungssignal bewirkt, daß die CPU-Einheit CP einen Lesezugriff auf die Einheiten PE1, PE2, PE4 ausführt. Dazu beaufschlagt sie zunächst die Steckplatz-Verbindungsleitung SI mit einem Steckplatz-Identifizierungssignal in Form eines Signals log. "1", wodurch die peripheren Einheiten PE1, PE2, PE4 adressiert werden, und liest die Pegel der Adreßleitungen AL1, AL2, AL4 ein. Jede periphere Einheit ist mit hier nicht dargestellten Pegelumschaltmitteln versehen, die für den Fall, daß eine periphere Einheit der CPU-Einheit CP ein Alarmsignal zugeführt hat, zunächst den Pegel der ihr zugeordneten Adreßleitung AL1, AL2, AL4 und anschließend den Pegel der Quittungsanzeigeleitung QU umschalten.

Die Pegelumschaltmittel können z. B. aus Transistoren bestehen. Der Kollektor eines ersten Transistors ist mit der entsprechenden Adreßleitung AL1, AL2, AL4 und der Emitter mit einem einem Pegel log. "0" entsprechenden Massepotential verbunden. Das Steckplatz-Identifizierungssignal steuert den Transistor an, wodurch dieser durchschaltet und die Adreßleitung AL1, AL2, AL4 mit dem Massepotential kurzschließt. Der Kollektor eines zweiten Transistors ist mit der Quittungsanzeigeleitung QU und der Emitter mit dem Massepotential verbunden. Dieser Transistor wird ebenfalls mit dem Steckplatz-Identifizierungssignal zeitverzögert angesteuert. Die Pegelumschaltmittel schalten den Pegel der Adreßleitung AL1, AL2, AL4 und der Quittungsanzeigeleitung QU nur dann um, wenn die entsprechende periphere Einheit PE1, PE2, PE4 ein Alarmsignal über die Unterbrechungsleitung UB der CPU-Einheit CP zugeführt hat. Dieses Alarmsignal steuert einen dritten Transistor, so daß dieser das Steckplatz-Identifizierungssignal den Steuereingängen der ersten und zweiten Transistoren aufschaltet. Es ist selbstverständlich möglich, die Pegelumschaltmittel in Form eines Programmes zu verwirklichen, das von einem auf der peripheren Einheit angeordneten Mikroprozessor bearbeitet wird.

Im vorliegenden Beispiel ist die periphere Einheit PE1 die Alarm auslösende Einheit, wodurch deren Pegelumschaltmittel den Pegel der ihr zugeordneten Adreßleitungen AL1 sowie den Pegel auf der Quittungsanzeigeleitung QU auf log. "0" umschalten. Die Umschaltung des Pegels auf der Quittungsanzeigeleitung QU beendet den Lesezugriff und die CPU-Einheit CP erkennt aufgrund der eingelesenen Pegel der Adreßleitungen AL1, AL2, AL4, daß die periphere Einheit PE1 die Alarm auslösende Einheit ist.

Es kann vorkommen, daß mehrere periphere Einheiten PE1, PE2, PE4 gleichzeitig über die Unterbrechungsleitung UB Alarmsignale der CPU-Einheit CP zuführen. Nachdem die CPU-Einheit das zuerst eintreffende Alarmsignal erkannt hat, adressiert sie über die Steckplatz-Verbindungsleitung SI die Einheiten PE1, PE2, PE3, von denen die Alarm auslösenden Einheiten zunächst die Pegel ihrere Adreßleitungen AL1, AL2, AL4 und anschließend den Pegel der Quittungsanzeigeleitung QU umschalten. Der zuerst erkannte, umgeschaltete Pegel auf der Quittungsanzeigeleitung QU beendet den Lesezugriff, und die eingelesenen Pegel der Adreßleitungen AL1, AL2, AL4 werden im Hinblick auf die Alarm auslösenden Einheiten ausgewertet. Die Reihenfolge der Alarmbearbeitung nach dieser Identifizierung der Alarm auslösenden Einheiten wird zweckmäßig priorisiert, z. B. nach der Reihenfolge der Steckplatznummer.

Es ist vorteilhaft, daß die CPU-Einheit CP vor der Adressierung der peripheren Einheiten PE1, PE2, PE4 über die Steckplatz-Verbindungsleitung SI die Adreßleitungen AL1, AL2, AL4 mit dem im Grundzustand gültigen Signal log. "1" beaufschlagt. Ein Signal log. "0" auf den Adreßleitungen AL1, AL2, AL4 während des Lesezugriffs wird somit sicher durch die den Alarm auslösende Einheit und nicht durch Einschwingvorgänge oder Störungen bewirkt.

Jede der peripheren Einheiten PE1, PE2, PE4 ist mit einem hier nicht dargestellten Alarmvektorregister versehen, in dem z. B. ein Alarm eines zu steuernden technischen Prozesses und/oder ein während eines Diagnosevorganges erzeugter Alarm codiert hinterlegt ist. Nachdem die CPU-Einheit CP die den Alarm auslösende Einheit erkannt hat, führt sie einen weiteren Lesezugriff auf das Alarmvektorregister dieser Einheit aus. Während dieses Lesezugriffs adressiert die CPU-Einheit CP zunächst diese Einheit über die entsprechenden Adreßleitungen AL1, AL2, AL4 und die Alarmvektorregister mit einem entsprechenden Adreßcode über einen Adreßbus AB. Nach diesem Lesezugriff wertet die CPU-Einheit CP den Inhalt des Registers aus und erkennt, welches Ereignis einen Alarm ausgelöst hat.

Im dargestellten Ausführungsbeispiel empfangen die Pegelumschaltmittel jeder peripheren Einheit PE1, PE2, PE4 während eines Lesezugriffs das Steckplatz-Identifizierungssignal, und für den Fall, daß die periphere Einheit PE1, PE2, PE4 ein Unterbrechungssignal der CPU-Einheit CP zugeführt hat, schalten die Pegelumschaltmittel zunächst den Pegel der ihr zugeordneten Adreßleitung AL1, AL2, AL4 und anschließend den Pegel der Quittungsanzeigeleitung QU um. Mit der Umschaltung des Pegels auf der Quittungsanzeigeleitung QU ist der Lesezugriff abgeschlossen. Man kann auch in der Weise vorgehen, daß die CPU-Einheit CP nach dem Empfang eines Unterbrechungssignals zyklisch oder nach vorgebbaren Zeiten einer Zeitüberwachungsschaltung der CPU-Einheit CP die Pegel der Adreßleitungen AL1, AL2, AL4 abfragt. In diesem Fall kann auf die Quittungsanzeigeleitung QU verzichtet werden. Weiterhin ist es möglich, anstatt der Steckplatz-Verbindungsleitung SI zur Übertragung des Steckplatz-Identifizierungssignals eine der Steuer- oder Datenleitungen des Systembusses SYB vorzusehen, womit die Steckplatz-Verbindungsleitung nicht mehr erforderlich ist.

## Patentansprüche

1. Anordnung mit mehreren Steckplätzen (SP1, ...), die über einen Daten- und Steuerleitungen aufweisenden Systembus (SYB) und über Adreßleitungen (AL1, AL2, AL4) miteinander verbunden sind und in die eine zur Ausführung von Lese- und/oder Schreibzugriffen geeignete CPU-Einheit (CP) und mehrere periphere Funktionseinheiten (PE1, PE2, PE4) gesteckt sind, mit einer Unterbrechungsanzeigeleitung (UB), über welche der CPU-Einheit (CP) durch die peripheren Einheiten (PE1, PE2, PE4) jeweils ein Alarm in Form eines Unterbrechungssignals zuführbar ist, wobei die CPU-Einheit (CP) die peripheren Einheiten (PE1, PE2, PE4) ermittelt, die einen Alarm auslösen,
**dadurch gekennzeichnet,**
- daß die Adreßleitungen (AL1, AL2, AL4) jeweils über eine zusätzliche Leitung (SL1, SL2, SL4) an einen Auswahlanschluß (AN1, AN2, AN4) eines Steckplatzes angeschlossen sind,
- daß die peripheren Einheiten (PE1, PE2, PE4) und die CPU-Einheit (CP) mit Mitteln zum Verbinden an einen der Auswahlanschlüsse (AN1, ...) und mit Mitteln zum Verbinden mit einer Steckplatz-Verbindungsleitung (SI) versehen sind, über welche die peripheren Einheiten (PE1, PE2, PE4) ein Steckplatz-Identifizierungssignal der CPU-Einheit (CP) empfangen,
- daß die peripheren Einheiten (PE1, PE2, PE4) jeweils mit Pegelumschaltmitteln versehen sind, wobei die Pegelumschaltmittel derjenigen peripheren Einheit (PE1, PE2, PE4), welche der CPU-Einheit (CP) ein Unterbrechungssignal zuführt und welche das Steckplatz-Identifizierungssignal der CPU-Einheit (CP) empfängt, den Pegel der dieser peripheren Einheit (PE1, PE2, PE4) zugeordneten Adreßleitung (AL1, AL2, AL4) umschalten, wodurch die CPU-Einheit (CP) diese periphere Einheit (PE1, PE2, PE4) als eine alarmauslösende Einheit erkennt.

2. Anordnung nach Anspruch 1, **dadurch gekennzeichnet**, daß die peripheren Einheiten (PE1, PE2, PE4) jeweils mit einem Alarmvektorregister versehen sind, welches die CPU-Einheit (CP) nach der Adressierung der Einheiten (PE1, PE2, PE4) über die Adreßleitungen (AL1, AL2, AL4) über einen Adreßbus (AB) adressiert.

3. Speicherprogrammierbare Steuerung mit einer Anordnung nach Anspruch 1 oder 2.

4. Speicherprogrammierbare Steuerung mit einem jeweils eine Anordnung nach Anspruch 1 oder 2 aufweisenden Zentralgerät und mindestens einem Erweiterungsgerät, die über ein Verbindungskabel verbunden sind, welches den System- und den Adreßbus (SYB, AB), die Adreßleitungen (AL1, ...) und weitere Adreßleitungen zur Adressierung des Erweiterungsgerätes aufweist.

5. Periphere Funktionseinheit (PE1, PE2, PE4), welche in einen der Steckplätze (SP1, ...) einer Anordnung nach Anspruch 1 oder 2 steckbar ist,
**dadurch gekennzeichnet,**
- daß die periphere Einheit (PE1, PE2, PE4) mit Mitteln zum Anschluß an einen Auswahlanschluß (AN1, AN2, AN4) des jeweiligen Steckplatzes (SP1, ...) und mit Mitteln zum Anschluß der peripheren Einheit (PE1, PE2, PE4) an eine Steckplatz-Verbindungsleitung (SI) versehen ist, über welche ein Steckplatz-Identifizierungssignal geführt ist, wobei der Auswahlanschluß (AN1, AN2, AN4) über eine zusätzliche Leitung (SL1, ...) an eine Adreßleitung (AL1, AL2, AL4) angeschlossen ist,
- daß die periphere Einheit (PE1, PE2, PE4) mit Pegelumschaltmitteln versehen ist, wobei die Pegelumschaltmittel für den Fall, daß die periphere Einheit (PE1, PE2, PE4) der CPU-Einheit (CP) ein Unterbrechungssignal zuführt und die periphere Einheit (PE1, PE2, PE4) das Steckplatz-Identifizierungssignal durch die CPU-Einheit (CP) empfängt, den Pegel der dieser peripheren Einheit (PE1, PE2, PE4) zugeordneten Adreßleitung (AL1, AL2, AL4) umschalten, wodurch die CPU-Einheit (CP) diese periphere Einheit (PE1, PE2, PE4) als eine alarmauslösende Einheit erkennt.

## Claims

1. Arrangement having a plurality of plug-in stations (SP1, ...), which are connected with each other by way of a system bus (SYB), which has data lines and control lines, and by way of address lines (AL1, AL2, AL4) and into which a CPU-unit (CP), which is suitable for effecting read and/or write access, and a plurality of peripheral functional units (PE1, PE2, PE4) are plugged, having an interrupt-indication line (UB), by way of which it is possible to feed to the CPU-unit (CP) by means of the peripheral units (PE1, PE2, PE4) a respective alarm in the form of an interrupt signal, in which case the CPU-unit (CP) determines which peripheral units (PE1, PE2, PE4) are triggering an alarm, characterised
- in that the address lines (AL1, AL2, AL4) are connected to a selection terminal (AN1, AN2, AN4) of a plug-in station by way of a respective additional line (SL1, SL2, SL4),
- in that the peripheral units (PE1, PE2, PE4) and the CPU-unit (CP) are provided with means for connection to one of the selection terminals (AN1, ...) and with means for connection to a plug-in station connecting line (SI), by way of which the peripheral units (PE1, PE2, PE4) receive a plug-in station identification signal of the CPU-unit (CP),
- in that the peripheral units (PE1, PE2, PE4) are provided with respective level switch-over means, in which case the level switch-over means of that peripheral unit (PE1, PE2, PE4) which feeds an interrupt signal to the CPU-unit (CP) and which receives the plug-in station identification signal of the CPU-unit (CP) switch over the level of the address line (AL1, AL2, AL4) associated with this peripheral unit (PE1, PE2, PE4), whereby the CPU-unit (CP) identifies this peripheral unit (PE1, PE2, PE4) as a unit which is triggering an alarm.

2. Arrangement according to claim 1, characterised in that the peripheral units (PE1, PE2, PE4) are provided with a respective alarm vector register, which the CPU-unit (CP) addresses by way of an address bus (AB) after addressing the units (PE1, PE2, PE4) by way of the address lines (AL1, AL2, AL4).

3. Programmable controller having an arrangement according to claim 1 or 2.

4. Programmable controller having a central controller unit, which has, respectively, an arrangement according to claim 1 or 2, and at least one expansion unit, which units are connected by way of a connecting cable which has the system bus and the address bus (SYB, AB), the address lines (AL1, ...) and further address lines for addressing the expansion unit.

5. Peripheral functional unit (PE1, PE2, PE4), which can be plugged into one of the plug-in stations (SP1, ...) of an arrangement according to claim 1 or 2, characterised
- in that the peripheral unit (PE1, PE2, PE4) is provided with means for connection to a selection terminal (AN1, AN2, AN4) of the respective plug-in station (SP1, ...) and with means for connection of the peripheral unit (PE1, PE2, PE4) to a plug-in station connecting line (SI), by way of which a plug-in station identification signal is directed, in which case the selection terminal (AN1, AN2, AN4) is connected to an address line (AL1, AL2, AL4) by way of an additional line (SL1, ...),
- in that the peripheral unit (PE1, PE2, PE4) is provided with level switch-over means, in which case, if the peripheral unit (PE1, PE2, PE4) feeds an interrupt signal to the CPU-unit (CP) and the peripheral unit (PE1, PE2, PE4) receives the plug-in station identification signal by means of the CPU-unit (CP), the level switch-over means switch over the level of the address line (AL1, AL2, AL4) which is associated with this peripheral unit (PE1, PE2, PE4), whereby the CPU-unit (CP) identifies this peripheral unit (PE1, PE2, PE4) as a unit which is triggering an alarm.

## Revendications

1. Dispositif comportant plusieurs emplacements d'enfichage (SP1, ...), qui sont reliés ensemble par l'intermédiaire d'un bus de système (SYB) comportant des lignes de données et des lignes de commande et par l'intermédiaire de lignes d'adresses (AL1, AL2, AL4) et dans lesquels une unité CPU (CP) adaptée à l'exécution d'accès en lecture et/ou en écriture et plusieurs unités fonctionnelles périphériques (PE1, PE2, PE4) sont enfichées, comportant une ligne d'indication d'interruption (UB), par l'intermédiaire de laquelle les unités périphériques (PE1, PE2, PE4) peuvent envoyer chacune à l'unité CPU (CP) une alarme sous forme de signal d'interruption, l'unité CPU (CP) déterminant alors les unités périphériques (PE1, PE2, PE4) qui déclenchent une alarme,
caractérisé par le fait que
- les lignes d'adresses (AL1, AL2, AL4) sont raccordées à chaque fois par l'intermédiaire d'une ligne supplémentaire (SL1, SL2, SL4) à une borne de sélection (AN1, AN2, AN4) d'un emplacement d'enfichage,
- les unités périphériques (PE1, PE2, PE4) et l'unité CPU (CP) sont munies de moyens pour la jonction avec une des bornes de sélection (AN1, ...) et de moyens pour la jonction avec une ligne de jonction d'emplacement d'enfichage (SI) par l'intermédiaire de laquelle les unités périphériques (PE1, PE2, PE4) reçoivent un signal d'identification d'emplacement d'enfichage de l'unité CPU (CP),
- les unités périphériques (PE1, PE2, PE4) sont munies chacune de moyens de commutation de niveau, les moyens de commutation de niveau de l'unité périphérique (PE1, PE2, PE4) qui envoie à l'unité CPU (CP) un signal d'interruption et qui reçoit de l'unité CPU (CP) le signal d'identification d'emplacement d'enfichage, commutant le niveau de la ligne d'adresses (AL1, AL2, AL4) associée à cette unité périphérique (PE1, PE2, PE4), permettant ainsi à l'unité CPU (CP) de reconnaître cette unité périphérique (PE1, PE2, PE4) comme étant une unité déclenchant une alarme.

2. Dispositif selon la revendication 1, caractérisé par le fait que les unités périphériques (PE1, PE2, PE4) sont munies chacune d'un registre de vecteur d'alarme qui est adressé par l'unité CPU (CP) par l'intermédiaire d'un bus d'adresses (AB) après l'adressage des unités (PE1, PE2, PE4) par l'intermédiaire des lignes d'adresses (AL1, AL2, AL4) .

3. Commande programmable en mémoire comportant un dispositif selon la revendication 1 ou 2.

4. Commande programmable en mémoire comportant un appareil central, ayant un dispositif selon la revendication 1 ou 2, et au moins un appareil d'extension, lesquels appareils sont reliés par l'intermédiaire d'un câble de jonction qui comprend le bus de système (SYB) et le bus d'adresses (AB), les lignes d'adresses (AL1, ...) et d'autres lignes d'adresses pour l'adressage de l'appareil d'extension.

5. Unité fonctionnelle périphérique (PE1, PE2, PE4), qui peut être enfichée dans un des emplacements d'enfichage (SP1, ...) d'un dispositif selon la revendication 1 ou 2,
caractérisée par le fait que
- l'unité périphérique (PE1, PE2, PE4) est munie de moyens pour le raccordement à une borne de sélection (AN1, AN2, AN4) de l'emplacement d'enfichage respectif (SP1, ...) et de moyens pour le raccordement de l'unité périphérique (PE1, PE2, PE4) à une ligne de jonction d'emplacement d'enfichage (SI) par l'intermédiaire de laquelle est envoyé un signal d'identification d'emplacement d'enfichage, la borne de sélection (AN1, AN2, AN4) étant raccordée par l'intermédiaire d'une ligne supplémentaire (SL1, ...) à une ligne d'adresses (AL1, AL2, AL4),
- l'unité périphérique (PE1, PE2, PE4) est munie de moyens de commutation de niveau, les moyens de commutation de niveau, dans le cas où l'unité périphérique (PE1, PE2, PE4) envoie à l'unité CPU (CP) un signal d'interruption et l'unité périphérique (PE1, PE2, PE4) reçoit de l'unité CPU (CP) un signal d'identification d'emplacement d'enfichage, commutent le niveau de la ligne d'adresses (AL1, AL2, AL4) associée à cette unité périphérique (PE1, PE2, PE4), l'unité CPU (CP) reconnaissant ainsi cette unité périphérique (PE1, PE2, PE4) comme étant une unité déclenchant une alarme.
